# EUROPÄISCHE PATENTSCHRIFT

(11) **EP 0 367 993 B1**
(45) Veröffentlichungstag und Bekanntmachung des Hinweises auf die Patenterteilung: **26.05.1993**
(21) Anmeldenummer: 89118482.2
(22) Anmeldetag: 05.10.1989
(51) Int. Cl.: B01D 46/42, B01D 46/10, B60H 3/00, F24F 13/00

(54) **Filtereinsatz, der im Verlauf eines Kanals auswechselbar von einem Schacht aufgenommen wird**
Filter insert exchangeably received by a shaft in the course of a conduit
Elément filtrant qui est, en cours d'un conduit, reçu pour une cheminée

(30) Priorität: 09.11.1988 DE 3837968
(43) Veröffentlichungstag der Anmeldung: 16.05.1990
(73) Patentinhaber: DAIMLER-BENZ AKTIENGESELLSCHAFT, 70327 Stuttgart (DE)
(72) Erfinder: Schöllhorn, Markus, D-7032 Sindelfingen (DE); Volz, Wolfgang, D-7037 Magstadt (DE); Arold, Klaus, D-7032 Sindelfingen (DE); Merk, Helmut, D-7033 Herrenberg (DE); Koukal, Heinz, D-7032 Sindelfingen (DE)

(56) Entgegenhaltungen:
- DE-U- 8 808 009
- NL-A- 6 710 369
- US-A- 3 849 092
- IBM TECHNICAL DISCLOSURE BULLETIN, Band 13, Nr. 2, Juli 1970, Seite 532, New York, US; R.W. CROUSE et al: "Sealing of filters to holding frames"

## Beschreibung

Die Erfindung betrifft ein Filter, das im Verlauf eines Kanales auswechselbar von einem Schacht aufgenommen wird und ein an eine Druckreduziereinrichtung anschließbares, als dehnbare Hohlkammer ausgebildetes Anpreßelement aufweist, dessen Innendruck zum Einsetzen des mit dem Anpreßelement versehenen Filters reduziert ist, wodurch sich zur zugeordneten Schachtwand hin ein umlaufender Spalt einstellt und dessen Innendruck nach erfolgter Positionierung des Filters zur Beseitigung des Spaltes und Herbeiführung einer Dichtwirkung wieder erhöht wird.

Ein auf diese Weise einbringbares Filter ist durch das IBM Technical Disclosure Bulletin, Band 13, Nr. 2, Juli 1970, Seite 532 bekannt. Zum erstmaligen Einbringen wird das innendruckreduzierte, die Funktion einer Dichtung übernehmende Anpreßelement wohl dem Filter angelagert, beim Erreichen der Gebrauchslage tritt das Anpreßelement jedoch in eine Rinne eines oberhalb des Filters angeordneten Rahmens ein, so daß nicht sichergestellt ist, daß beim Herausziehen des Filters zum Zwecke der Säuberung oder des Austausches, das Anpreßelement vom Filter mitgenommen wird. Deshalb ist es nicht ohne weiteres möglich, das Anpreßelement auf Schadstellen hin zu untersuchen, die seine Dichtfunktion beeinträchtigen können.

Da ein derartiges Anpreßelement über ein Abzweigstück an eine Druckreduzier- und Druckerhöhungseinrichtung angeschlossen sein muß, erfolgt im Bereich des Abganges des Abzweigstückes eine Verhärtung, so daß die Elastizität des Anpreßelementes reduziert wird und nicht mehr gewährleistet ist, daß Unebenheiten der filterseitigen Anlagefläche ausgeglichen werden. Es kann somit zu Undichtigkeiten kommen.

Es ist Aufgabe der Erfindung, eine Möglichkeit zu schaffen, anläßlich der Säuberung oder des Austausches des Filters das Anpreßelement leicht auf mögliche Beschädigungen hin zu untersuchen und sicherzustellen, daß selbst bei nicht vollflächiger Anlage des einen hohen Innendruck aufweisenden Anpreßelementes eine verläßliche Dichtwirkung gegeben ist.

Diese Aufgabe wird bei einem Filtereinsatz gemäß dem Oberbegriff des Patentanspruches 1 durch dessen kennzeichnende Merkmale gelöst.

Bei einem bevorzugten Ausführungsbeispiel der Erfindung läuft das Anpreßelement weitgehend um und sein eines Ende ist verschlossen, während sein anderes Ende mit einem Anschluß versehen ist.

Es ist aber auch möglich, daß Wandbereiche der Hohlkammer von festen Wandungsteilung des Filters gebildet werden.

Das Filter kann quer zur Strömungsrichtung geteilt sein und das Anpreßelement von einer Nut der Teilung aufgenommen werden. Diese Ausbildung ermöglicht auf einfache Weise die Hintereinanderschaltung eines Staub- und eines Absorptionsfilters.

Verschiedene Ausführungsbeispiele der Erfindung werden nachfolgend anhand der Zeichnung näher erläutert. Es zeigen:
- Fig. 1: ein filterseitig festgelegtes schlauchförmiges Anpreßelement und dessen Anschluß an zwei unterschiedliche Druckreduziereinrichtungen,
- Fig. 2: Anfang- und Endbereich eines weitgehend umlaufenden schlauchförmigen Anpreßelementes,
- Fig. 3: der Anschlußbereich eines in sich geschlossenen Anpreßelementes,
- Fig. 4: ein Anpreßelement mit festen Wandbereichen und
- Fig. 5: einen zweigeteilten Filter mit einem im Teilungsbereich angeordneten Anpreßelement.

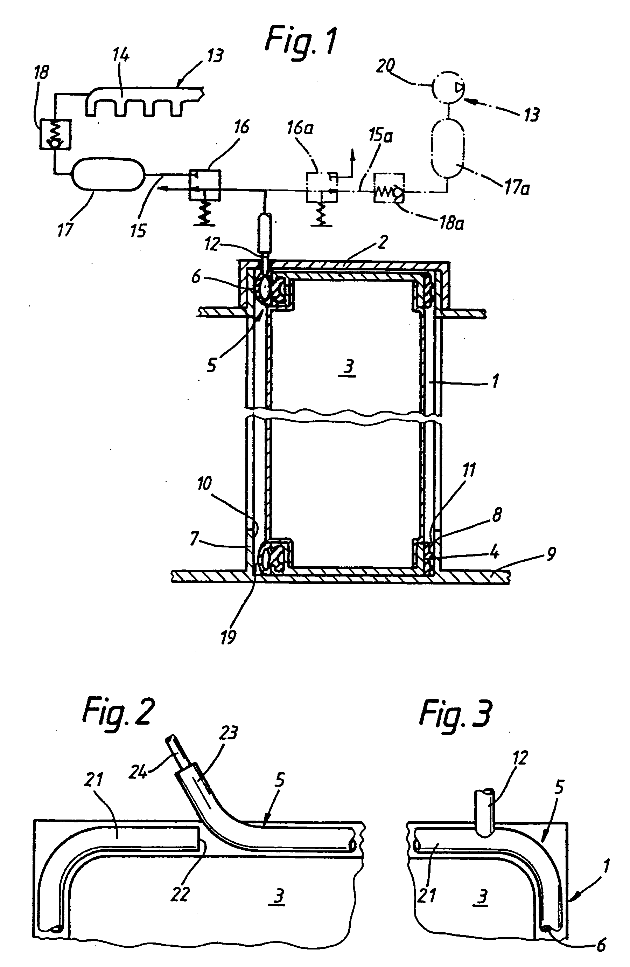

Gemäß Fig. 1 wird ein nach oben aus einem Schacht 1 nach dem Entfernen eines Deckels 2 herausziehbares Filter 3 über eine zur unterstützenden Ausnützung der Druckdifferenz vor und nach dem Filter abströmseitige Dichtung 4, die von einem Anpreßelement 5 in Form einer umlaufenden Hohlkammer 6 aus elastischem Material beaufschlagt wird, dichtend aufgenommen. Der im wesentlichen aus zwei bis auf die deckselseitige Einführöffnung miteinander verbundenen Rahmenteilen 7 und 8 bestehende Schacht 1 bildet einen Bestandteil eines einer Heizungs- oder Klimaanlage in einem Kraftwagen zugeordneten, nicht näher dargestellten Kanals 9.

In der oberen Zeichnungshälfte von Fig. 1 liegt die Hohlkammer 6 mit Vorspannung an der zugeordneten Schachtwand 10 an und die Dichtung 4 wird gegen die der Schachtwand 10 gegenüberliegende Schachtwand 11 gepresst. Die Aufhebung der Dichtwirkung wird dadurch herbeigeführt, daß die Hohlkammer 6 einen Anschlußstutzen 12 aufweist, der an eine Druckreduziereinrichtung 13 anschließbar ist. Die Druckreduziereinrichtung 13 kann eine Unterdruckquelle darstellen und z.B. durch das Saugrohr 14 einer nicht dargestellten Brennkraftmaschine gebildet werden. Die Verbindung zwischen dem Anschlußstutzen 12 und dem Saugrohr 14 erfolgt durch eine Leitung 15, in der ein Ventil 16, ein Vorrastbehälter 17 und ein Rückschlagventil 18 angeordnet sind. Bei diesen Voraussetzungen ist die Elastizität der Hohlkammer 6 so bemessen, daß in der dargestellten drucklosen Stellung, in der das Ventil 16 mit der freien Atmosphäre verbunden ist, die Hohlkammer 6 mit Vorspannung an der Schachtwand 10 anliegt. Wird das Ventil 16 umgesteuert, so erfolgt eine Beaufschlagung der Hohlkammer 6 durch Unterdruck und diese wird zusammengedrückt, wie dies aus der unteren Zeichnungshälfte hervorgeht. Zwischen dem Anpreßelement 5 und der Schachtwand 10 bildet sich ein Spalt 19, so daß es beim Herausziehen des Filters 3 auch zu einer Spaltbildung zwischen der Dichtung 4 und der Schachtwand 11 kommt. Der Filter 3 kann somit ohne Kraftanstrengung und ohne Beschädigungsgefahr für das Anpreßelement 5 und die Dichtung 4 getauscht werden.

Wie in der oberen Zeichnungshälfte von Fig. 1 rechtsseitig angedeutet, kann die Druckreduziereinrichtung 13 auch aus einer Pumpe 20 bestehen, die einen Bestandteil einer Zentralverriegelungseinrichtung eines Kraftwagens darstellen kann. In der strichpunktiert gezeichneten Leitung 15a ist ein Ventil 16a, ein Vorratsbehälter 17a und ein Rückschlagventil 18a plaziert. Diese Anordnung erlaubt den Einsatz besonders flexibler Anpreßelemente 5, weil zur Herbeiführung der Dichtwirkung Überdruck eingespeist wird, der vor dem Filtertausch unter Atmosphärendruck abgesenkt wird. Es kommt dann auch hier wieder zu der bereits beschriebenen Spaltausbildung, die einen problemlosen Filterwechsel ermöglicht.

Den Fig. 2 und 3 ist zu entnehmen, daß das Anpreßelement 5, das natürlich auch aus einzelnen, untereinander in Verbindung stehenden und ringsum verteilt angeordneten Elementen bestehen könnte, zweckmäßigerweise als Schlauch 21 ausgebildet ist. Der Schlauch 21 in Fig. 2 kommt als Meterware zur Anwendung, wobei ein Ende 22 verschlossen und das andere Ende 23 mit einem Anschluß 24 versehen wird. Wie aus Fig. 3 ersichtlich, ist der Schlauch 21, der schachtseitig festgelegt ist und der gleichzeitig die Funktion einer sonst separaten Dichtung übernehmen kann, in sich geschlossen und mit einem Anschlußstutzen 12 versehen.

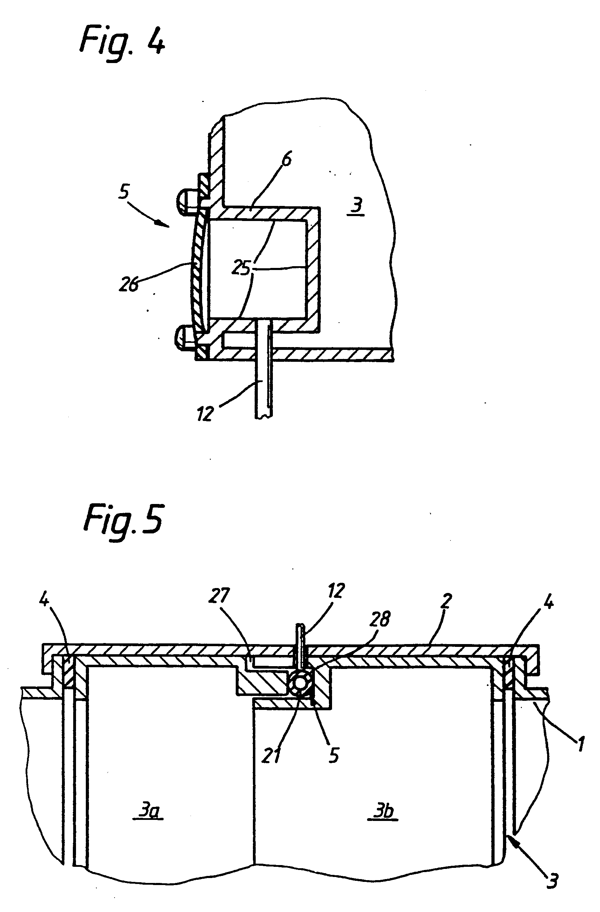

Beim Ausführungsbeispiel nach Fig. 4, dessen Anpreßelement 5 wiederum die Form einer umlaufenden Hohlkammer 6 aufweist, bestehen Wandungsteile 25 derselben aus Rahmenteilen des Filters 3, von denen ein Anschlußstutzen 12 wegführt. Den Abschluß der Hohlkammer 6 bildet eine Membran 26 aus besonders elastischem Werkstoff, die sich bei Druckeinleitung in das Anpreßelement aufwölbt und durch Anlage an der zugeordneten Schachtwand die erforderliche Abdichtwirkung erbringt.

Wie Fig. 5 zeigt, kann auch ein quer zur Durchströmungsrichtung geteilter, aus Filterabschnitten 3a und 3b bestehender Filter 3 zum Einsatz kommen. Diese Form wird besonders dann gewählt, wenn neben einem Staubfilter auch ein Absorptionsfilter vorgesehen ist. Im Bereich der oberseitig durch einen Deckel 2 überdeckten Teilung 27 wird eine Nut 28 ausgebildet, in die der Schlauch 21, der mit einem Anschußstutzen 12 versehen ist, eingelagert ist. Bei Druckeinleitung in den Schlauch 21, bzw. beim Aufbau von Atmosphärendruck in demselben, werden beide Filterabschnitte 3a und 3b gegen die zugeordneten Dichtungen 4 gepresst.

## Patentansprüche

1. Filter (3), das im Verlauf eines Kanales auswechselbar von einem Schacht (1) aufgenommen wird und ein an eine Druckreduziereinrichtung (13) anschließbares, als dehnbare Hohlkammer (6) ausgebildetes Anpreßelement (5) aufweist, dessen Innendruck zum Einsetzen des mit dem Anpreßelement (5) versehenen Filters (3) reduziert ist, wodurch sich zur zugeordneten Schachtwand (10, 11) hin ein umlaufender Spalt (19) einstellt und dessen Innendruck nach erfolgter Positionierung des Filters (3) zur Beseitigung des Spaltes (19) und Herbeiführung einer Dichtwirkung wieder erhöht wird,
**dadurch gekennzeichnet,**
daß das Anpreßelement (5) filterseitig befestigt ist und die Abdichtung durch eine dem Anpreßelement (5) filterseitig gegenüberliegende, umlaufende Dichtung (4) erfolgt.

2. Filtereinsatz nach Anspruch 1,
**dadurch gekennzeichnet,**
daß das Anpreßelement (5) weitgehend umläuft und sein eines Ende (22) verschlossen ist, während sein anderes Ende (23) mit einem Anschluß (24) versehen ist.

3. Filtereinsatz nach Anspruch 1,
**dadurch gekennzeichnet,**
daß Wandbereiche (25) der Hohlkammer (6) von festen Wandungsteilen des Filters (3) gebildet werden.

4. Filtereinsatz nach einem oder mehreren der vorangegangenen Ansprüche,
**dadurch gekennzeichnet,**
daß das Filter (3) quer zur Strömungsrichtung geteilt ist und das Anpreßelement (5) von einer Nut (28) der Teilung (27) aufgenommen wird.

## Claims

1. Filter (3) which is received exchangeably by a shaft (1) along a channel and which has a pressing element (5) which can be connected to a pressure-reducing device (13) and is designed as an expandable hollow chamber (6) and the internal pressure of which is reduced for the insertion of the filter (3) equipped with the pressing element (5), with the result that a continuous gap (19) is obtained relative to the associated shaft wall (10, 11), and the internal pressure of which is increased again after the completed positioning of the filter (3) in order to eliminate the gap (19) and bring about a sealing effect, characterised in that the pressing element (5) is fastened on the filter side and the sealing takes place by means of a continuous gasket (4) located opposite the pressing element (5) on the filter side.

2. Filter insert according to Claim 1, characterised in that the pressing element (5) is substantially continuous and its one end (22) is closed whilst its other end (23) is equipped with a connection piece (24).

3. Filter insert according to Claim 1, characterised in that wall regions (25) of the hollow chamber (6) are formed by fixed wall parts of the filter (3).

4. Filter insert according to one or more of the preceding claims, characterised in that the filter (3) is divided transversely relative to the direction of flow and the pressing element (5) is received by a groove (28) of the division (27).

## Revendications

1. Filtre (3) qui est monté interchangeable dans un puits intercalé dans la longueur d'un conduit, et qui présente un élément de pression composé d'une chambre expansible et pouvant être raccordé à un dispositif de réduction de la pression, et dont la pression intérieure est réduite pour la mise en place du filtre muni de l'élément de pression, de sorte qu'il se forme une fente circonférentielle qui le sépare de la paroi correspondante du puits, et dont la pression intérieure est de nouveau relevée après le positionnement du filtre, pour supprimer la fente et établir un joint étanche,
caractérisé
en ce que l'élément de pression (5) est fixé au filtre et que l'étanchéité est assurée par une garniture d'étanchéité périphérique (4) qui fait face à l'élément de pression (5), côté filtre.

2. Filtre selon la revendication 1,
caractérisé
en ce que l'élément de pression (5) s'étend sur une grande partie de la périphérie et qu'une de ses extrémités (22) est fermée tandis que son autre extrémité (23) est munie d'un raccord (24).

3. Filtre selon la revendication 1,
caractérisé
en ce que des régions de parois (25) de la chambre (6) sont formées par des parties de parois fixes du filtre (3).

4. Filtre selon une ou plusieurs des revendications prcédentes,
caractérisé
en ce que le filtre (3) est divisé transversalement à la direction de l'écoulement et l'élément de pression (5) est logé dans une rainure (28) du joint (27).
